Europäisches Patentamt

European Patent Office

Office européen des brevets

(19)

(11) Numéro de publication : **0 148 092**
**B1**

(12) **FASCICULE DE BREVET EUROPÉEN**

(45) Date de publication du fascicule du brevet :
09.09.87

(51) Int. Cl.⁴ : **B 65 G 37/02,** G 21 C 21/00,
B 23 Q 7/00

(21) Numéro de dépôt : **84402752.4**

(22) Date de dépôt : **28.12.84**

(54) **Installation de fabrication à plusieurs postes fixes de travail et à dispositif de manutention.**

(30) Priorité : 30.12.83 FR 8321126

(43) Date de publication de la demande :
10.07.85 Bulletin 85/28

(45) Mention de la délivrance du brevet :
09.09.87 Bulletin 87/37

(84) Etats contractants désignés :
BE DE GB IT SE

(56) Documents cités :
CH-A- 597 059
DE-C- 1 237 005
FR-A- 1 089 081
FR-A- 1 209 491
US-A- 3 024 058
US-A- 3 149 736

(73) Titulaire : **SOCIETE COGEMA, FRAMATOME et URA-NIUM PECHINEY**
**2, rue Paul Dautier**
**F-78140 Velizy Villacoublay (FR)**

(72) Inventeur : **Vere, Bernard**
**2, les Chusets Brie et Angonnes**
**F-38320 Eybens (FR)**
Inventeur : **Mathevon, Paul**
**Avenue Achille Maucuer**
**F-84500 Bollene (FR)**

(74) Mandataire : **Fort, Jacques et al**
**CABINET PLASSERAUD 84, rue d'Amsterdam**
**F-75009 Paris (FR)**

Jouve, 18, rue St-Denis, 75001 Paris, France

## Description

L'invention a pour objet une installation de fabrication du type comportant plusieurs postes de travail fixes que doivent successivement parcourir des objets tous identiques au cours de leur fabrication. Elle trouve une application particulièrement importante dans la fabrication des crayons de combustible nucléaire constitués par une gaine étanche allongée contenant un empilement de pastilles de matériau combustible et fermée par des bouchons. Toutefois, elle est également utilisable chaque fois que l'objet à traiter a une forme générale externe qui reste invariable au cours de la fabrication et, surtout, lorsqu'il a une forme approximativement cylindrique allongée.

Une installation du type ci-dessus défini, dans laquelle les postes de travail sont disposés le long au moins d'une travée et correspondant au préambule de la revendication 1, est connue de l'art antérieur.

Un objet doit fréquemment, au cours de sa fabrication, être traité à plusieurs postes successifs. Il est de pratique courante de prévoir, entre ces postes, un convoyeur, comportant éventuellement des moyens de stockage formant tampon et compensant les à-coups de fabrication à chaque poste. Une telle installation a l'inconvénient d'être relativement figée et de n'autoriser que difficilement des transferts de certains des objets vers des emplacements particuliers, par exemple vers un atelier de réparation ou vers un rebut, à la suite d'un défaut apparu à un poste de contrôle.

L'invention vise à fournir une installation de fabrication à plusieurs postes de travail et à dispositif de manutention automatisable répondant mieux que celles antérieurement connues aux exigences de la pratique, notamment en ce qu'elle autorise des stockages intermédiaires suffisants pour assurer la régularité du fonctionnement sans pour autant exiger un dispositif de manutention complexe et tout en assurant une grande indépendance de fonctionnement entre les différents postes de travail et les moyens de manutention.

Dans ce but, l'invention propose notamment une installation de fabrication selon le préambule de la revendication 1, caractérisée en ce que le dispositif de manutention comporte, d'une part, un transporteur aérien mobile le long de la travée et muni de moyens permettant de saisir, de transporter et de déposer un lot d'un nombre déterminé d'objets, d'autre part, au droit de chaque poste de travail, un dispositif de stockage intermédiaire et de reprise ayant un poste amont de dépose par le transporteur, un poste aval de reprise par le transporteur et un convoyeur capable de saisir en bloc le lot d'objets au poste amont, de présenter les objets un à un au poste de travail et de les poser en bloc au poste aval.

On autorise ainsi un fonctionnement totalement asynchrone du transporteur et de chaque poste de travail. Il suffit que le transporteur puisse déposer (ou saisir) un lot complet sur un dispositif de stockage intermédiaire à la seule condition que son poste de dépose (ou de reprise) soit libre (ou totalement occupé), quel que soit l'avancement du travail sur le lot porté par le convoyeur correspondant.

Dans le cas, important car il se prête particulièrement bien à la mise en œuvre de l'invention, d'une installation de fabrication de crayons de combustible nucléaire, chaque dispositif de stockage intermédiaire comporte avantageusement un convoyeur présentant plusieurs courroies sans fin parallèles munies de crans de réception des crayons à un pas supérieur au diamètre de ces derniers et les postes amont et aval comportent des supports parallèles munis de crans au même pas que celui des courroies, pouvant prendre une position haute au-dessus du convoyeur pour soutenir les crayons et une position basse dans laquelle les crayons reposent sur le convoyeur. Le transporteur aérien peut alors comporter un pont roulant le long de la travée, muni d'un palonnier déplaçable verticalement et comportant des clés insérables entre crayons et permettant de saisir ces derniers. Du fait du diamètre réduit des crayons, ces derniers peuvent aisément être groupés en grand nombre (par vingt-quatre par exemple), sous forme d'une nappe présentant une dimension transversale réduite.

Parmi les avantages de la disposition ci-dessus définie, il faut relever la possibilité d'ajouter ou de retrancher des postes de travail en nombre quelconque et en un emplacement quelconque (puisque le transporteur peut faire suivre, aux objets, un trajet comportant des aller-retours), de modifier la séquence, de prévoir plusieurs postes de travail opérant en parallèle pour effectuer les opérations plus longues que celles réalisées à d'autres postes de travail. Des stockages intermédiaires peuvent être prévus, à l'issue d'une opération de contrôle par exemple, pour attendre le résultat de celle-ci avant de poursuivre la fabrication. Aucun retournement des objets n'est nécessaire, les postes de travail pouvant être placés alternativement d'un côté et de l'autre de la travée de manutention. Enfin, la conception et l'automatisation de l'installation sont facilitées par l'identité des postes de stockage et de reprise.

Lorsque les opérations à effectuer sur les objets sont nombreuses, les postes de travail peuvent être répartis au long de deux travées parallèles munies chacune d'un transporteur, le passage des objets d'une travée à l'autre étant effectué à l'aide d'un transbordeur. La zone située entre les deux travées peut être occupée par des postes travaillant d'un seul côté ou des deux côtés. On réduit ainsi l'encombrement longitudinal et on peut, de plus, réserver des zones supplémentaires, notamment des zones de stockage. Un transbordeur supplémentaire situé à l'extrémité des travées peut être prévu pour desservir ces zones supplémentaires.

L'invention sera mieux comprise à la lecture de la description qui suit d'une installation de fabrication de crayons de combustible nucléaire pour réacteur à eau sous pression, donnée à titre d'exemple non limitatif. La description se réfère aux dessins qui l'accompagnent, dans lesquels :

la Figure 1 est une vue en coupe longitudinale d'un crayon de combustible représentatif ;

la Figure 2 est une vue en plan, très schématique, montrant la disposition générale d'une installation à deux travées de manutention parallèles et deux transporteurs.

la Figure 3 est une vue en plan d'une installation particulière suivant le schéma de la Figure 2,

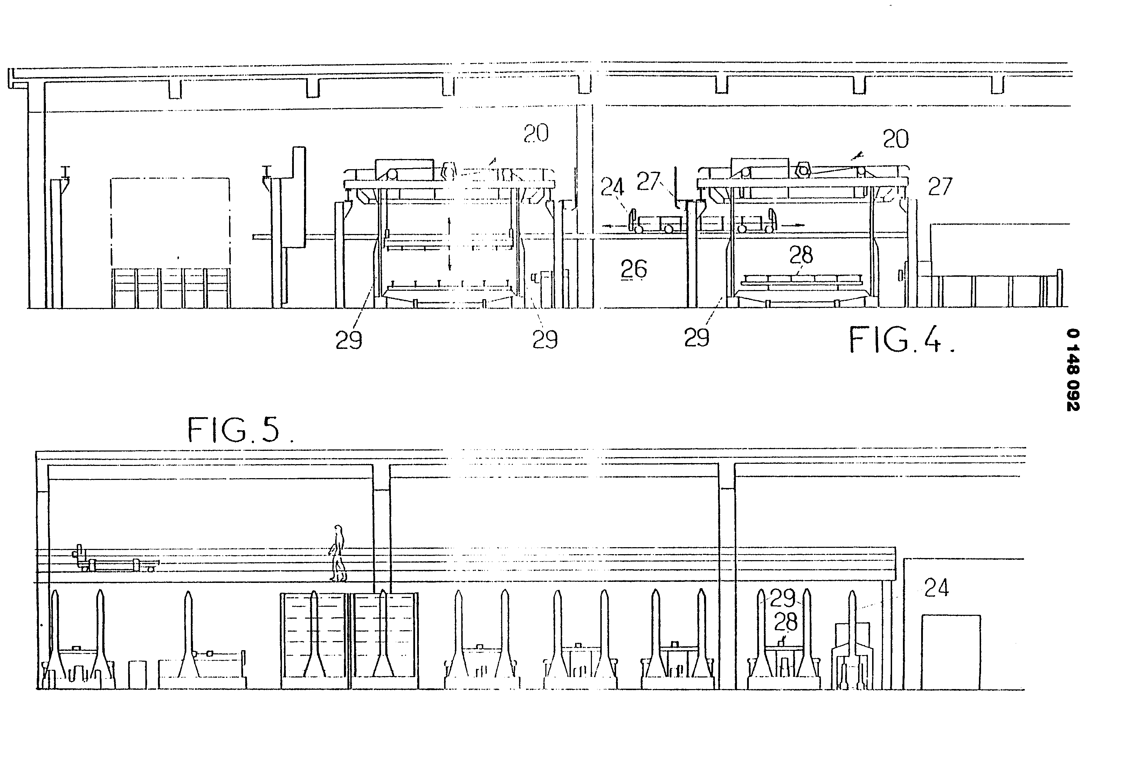

les Figures 4 et 5 sont, respectivement, des vues en élévation suivant les lignes IV-IV et V-V de la Figure 3,

la Figure 6 est une vue en élévation simplifiée, montrant un transporteur utilisable dans l'installation des Figures 2 à 5,

les Figures 7 et 8 sont des vues en élévation et en plan, respectivement, du palonnier du transporteur de la Figure 6,

la Figure 9 est une vue de détail dans la direction de la flèche IX de la Figure 7,

la Figure 10 est une vue de détail, en coupe suivant un tracé vertical passant notamment par l'axe du plateau de commande montré en Figure 9.

la Figure 11 est une coupe d'une fraction suivant un plan vertical transversal à une travée de manutention, montrant une fraction du palonnier des Figures 7 à 9, cette Figure étant destinée à faire apparaître la tringlerie de commande des clés,

la Figure 12 est une vue à grande échelle, en coupe suivant un plan vertical passant par l'axe d'une des piges d'amortissement portées par le palonnier des Figures 7 à 9,

les Figures 13A et 13B sont des schémas montrant la disposition des contacteurs de réduction et d'augmentation de vitesse sur l'une des potences du pont du transporteur de la Figure 6, respectivement depuis la gauche et la droite,

la Figure 14 montre schématiquement, en élévation, un dispositif de stockage général appartenant à l'installation.

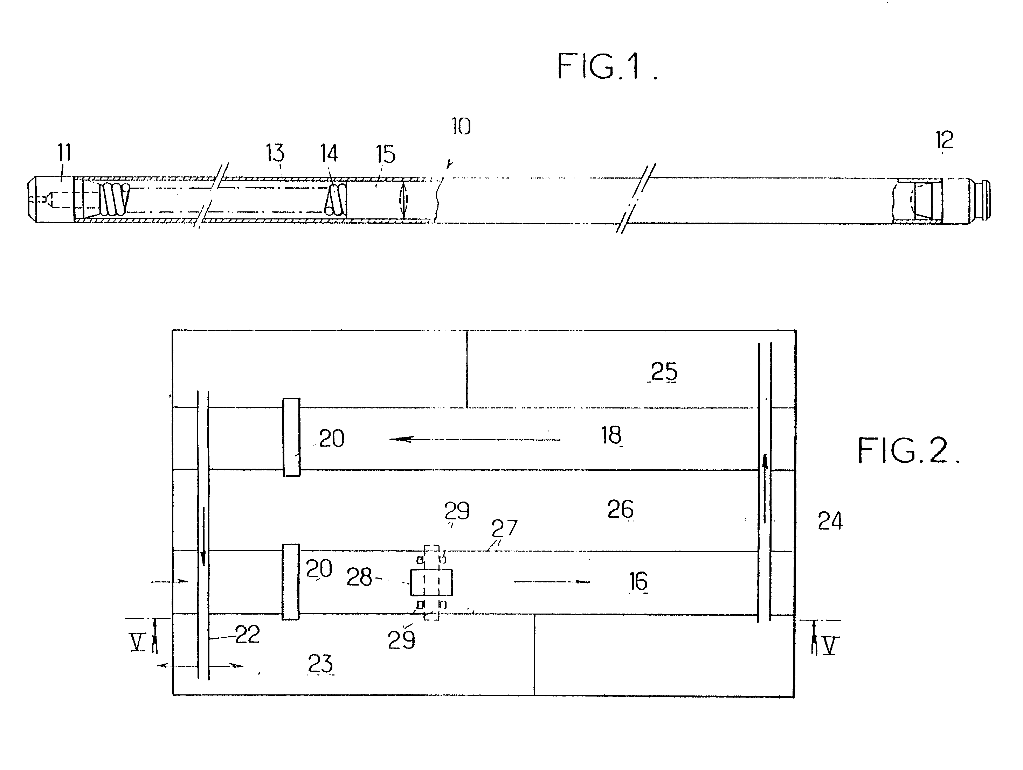

L'installation qui sera décrite à titre d'exemple permet notamment de fabriquer des crayons combustibles 10 du genre montré en Fig. 1. Ces crayons comportent une gaine métallique 13 constituée par un tube de faible diamètre et de grande longueur fermé par des bouchons 11 et 12. Un empilement de pastilles calibrées 15 d'oxyde d'uranium, constituant le combustible, est maintenu en appui contre le premier bouchon 12 par un ressort 14 qui prend appui sur le second bouchon 11. Ce bouchon 11 est percé d'un trou permettant la mise en pression de la gaine lorsqu'il est mis en place, puis ce trou est obturé.

L'installation schématisée en Figure 2 comporte deux travées de manutention 16 et 18 desservies chacune par un transporteur 20. Deux transbordeurs 22 et 24 permettent de déplacer un lot de crayons à la fois d'une travée à l'autre, entre deux emplacements accessibles par les ponts roulants constituant transporteurs aériens. Ces transbordeurs permettent également de desservir, l'un une zone de stockage final 23, l'autre, une zone de stockage tampon 25 placées chacune d'un côté du jeu de travées. Ces zones n'occupent qu'une fraction de la longueur des travées de manutention. Le reste de la longueur des zones latérales peuvent constituer des travées latérales de fabrication, occupées par des postes de travail s'ajoutant à ceux occupant une travée centrale de fabrication 26.

Les travées de manutention 16 et 18 sont encadrées par des poutres 27 reliant des portiques et sur lesquelles reposent des rails de circulation. Elles sont équipées de jeux de guides fixes 29 reposant au sol, chaque jeu étant au droit d'un poste fixe de fabrication, ce dernier terme désignant un emplacement où s'effectue une intervention qui peut être de montage, de fabrication ou de contrôle. Un seul de ces jeux 29 est monté schématiquement sur la Figure 2. Ces jeux de guides 29 ont pour rôle d'assurer la précision requise de dépose et de reprise d'un lot de gaines ou de crayons sur le dispositif de stockage intermédiaire 28 associé à chaque poste de travail.

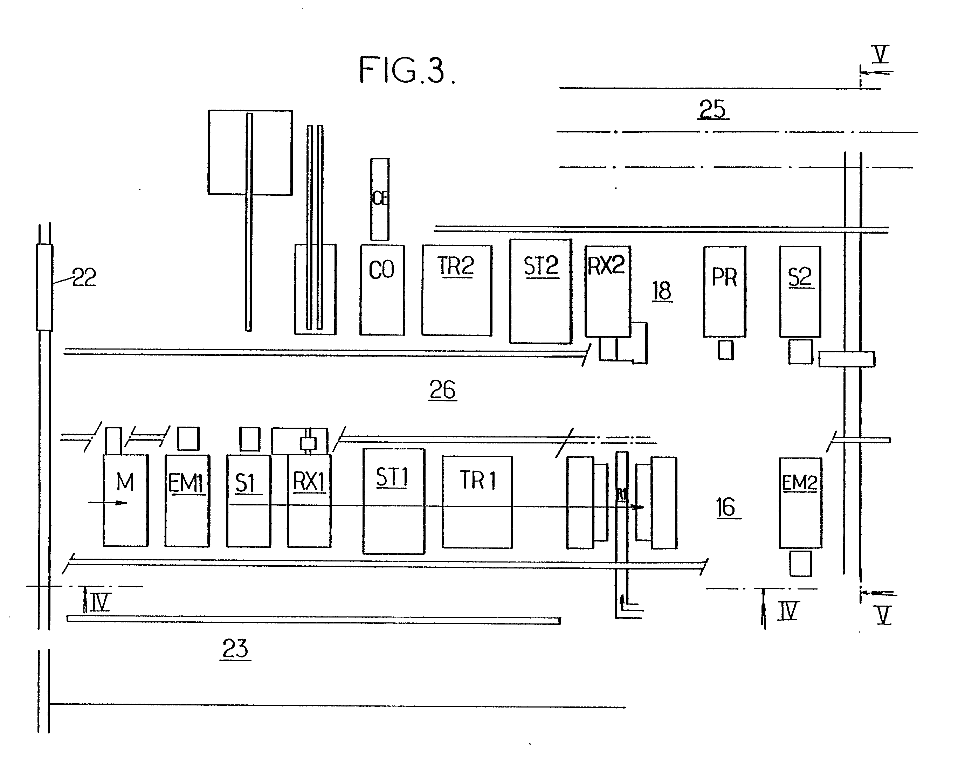

Pour illustrer un agencement possible des différents postes de travail, on a indiqué sur la Figure 3 une répartition en plan qui peut être adoptée.

Lorsque la fabrication des crayons comporte la séquence d'opérations successives suivante, réalisées alors que les gaines ou crayons occupent les zones indiquées entre parenthèses :

marquage de la gaine 13 (poste M),

montage du premier bouchon 12 sur la gaine (poste EM1),

soudage du bouchon 12 (poste S1),

contrôle aux rayons X de la soudure du bouchon 12 (poste RX1),

stockage (ST1) puis contrôle visuel destiné à déceler les pièces défectueuses, et enlèvement de celles-ci (TR1),

insertion des pastilles 15 dans la gaine (poste R1),

montage du ressort 14 et du deuxième bouchon 11 (poste EM2),

transfert d'une travée à l'autre par le transbordeur 24,

soudage du deuxième bouchon 11 (poste S2), mise sous pression et obturation par soudage (poste PR),

contrôle aux rayons X des soudures de fixation du deuxième bouchon et d'obturation (poste RX2),

nouveau contrôle visuel et enlèvement des crayons rebutés (TR2),

contrôle d'étanchéité (poste CO),

contrôle d'enrichissement du combustible et contrôle final du crayon terminé (poste CE).

Les appareils permettent de réaliser les diverses fonctions pouvant avoir toute constitution appropriée.

On décrira maintenant, en succession, les composants de l'installation qui permettent d'amener les crayons à l'emplacement d'intervention des appareils successifs, c'est-à-dire :

les transporteurs déplaçables le long des travées de manutention,

et les jeux de guides fixes de dépose et de reprise.

Transporteurs

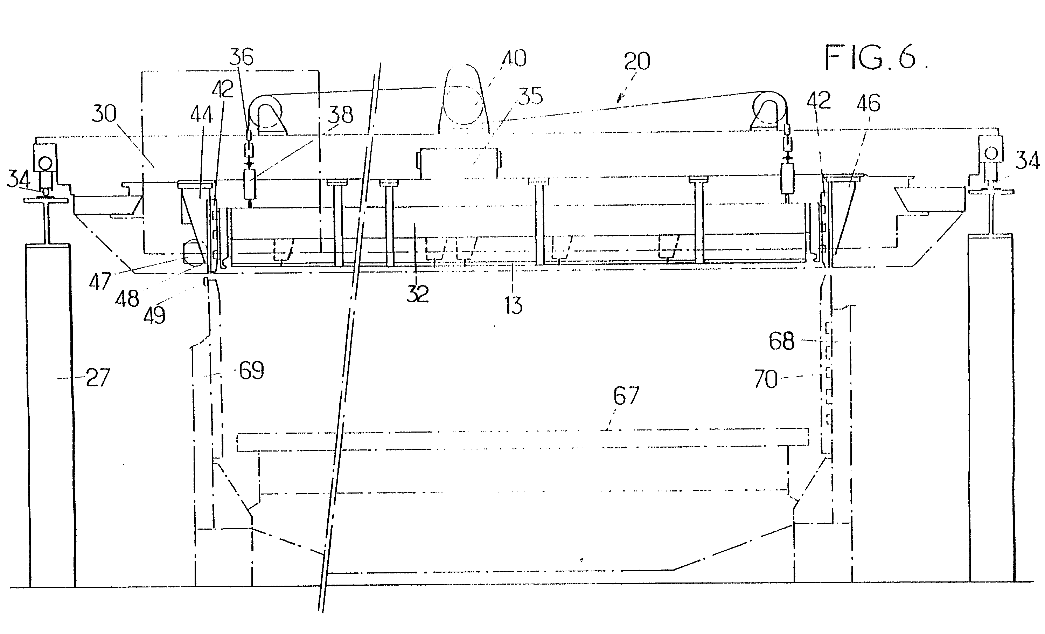

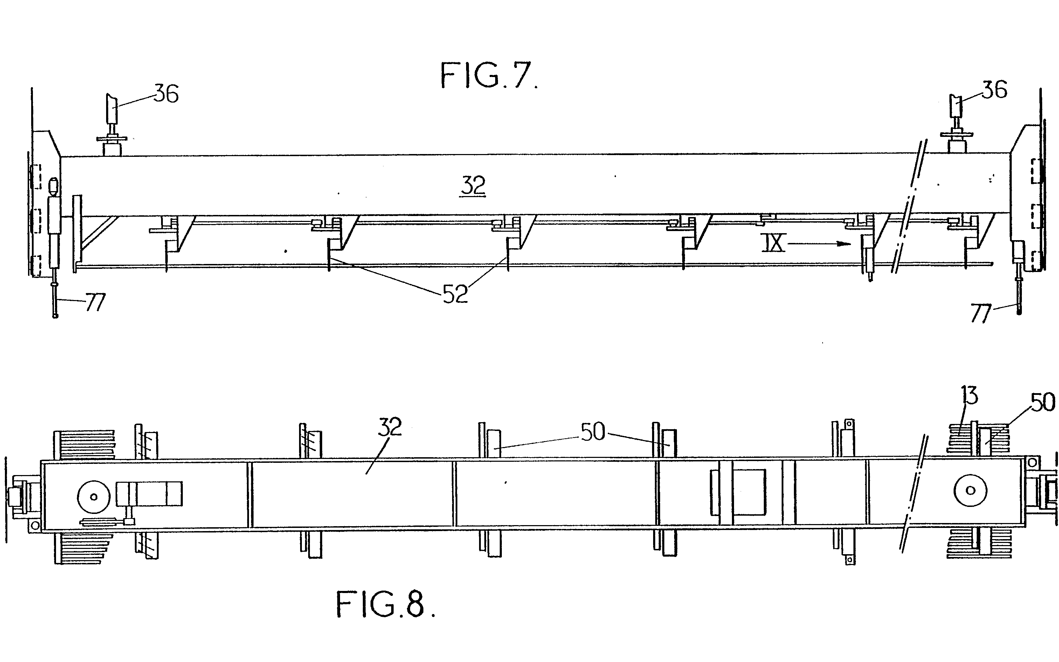

Les deux transporteurs 20 (Figures 5 à 9) sont pratiquement identiques, de sorte qu'un seul sera décrit. Ils peuvent être regardés comme constitués par un pont roulant 30 à tablier et un palonnier 32. Le pont roulant est équipé de deux boggies de roulement 34 reposant sur deux rails fixes situés au-dessus des poutres 27. Un motoréducteur 35 monté sur le pont roulant commande simultanément, par l'intermédiaire de deux demi-arbres, les roues motrices des boggies 34.

Le palonnier 32 est suspendu au pont 30 par deux câbles 36 munis d'amortisseurs et d'un limiteur d'effort 38. Un jeu de poulies montées sur le tablier du pont conduit chaque câble vers un enrouleur situé en bout d'un motoréducteur 40 de déplacement vertical du palonnier 32. Les extrémités du palonnier portent deux guides latéraux verticaux 42 en forme de U qui s'engagent sur des galets portés par des potences 44, 46 fixées sous le tablier du pont. Le train de galets porté par la potence 44 n'est pas directement fixé à cette potence. Il est monté sur un châssis déplaçable horizontalement, dans un plan vertical perpendiculaire au palonnier, par rapport à la potence 44. Ce châssis 47 est guidé et un moteur indépendant 48 permet de le déplacer de façon à rattraper les erreurs sur l'emplacement d'arrêt de l'extrémité correspondante du palonnier 32.

Il faut à ce sujet noter que la masse et la dimension du transporteur ne permettent pas d'avoir une rigidité absolue et un guidage parfait. Si, comme on le verra plus loin, l'arrêt du pont roulant est commandé par une cellule photoélectrique montée sur la potence 46, on arrive bien à arrêter l'extrémité du pont portant la potence 46 à un emplacement désiré mais l'autre extrémité peut se trouver alors décalée. Cela rend nécessaire le réaxage du palonnier 32 par déplacement du châssis.

L'emplacement correct peut être défini par un système de deux cellules photoélectriques portées par le châssis 47 et coopérant avec deux témoins fixes 49.

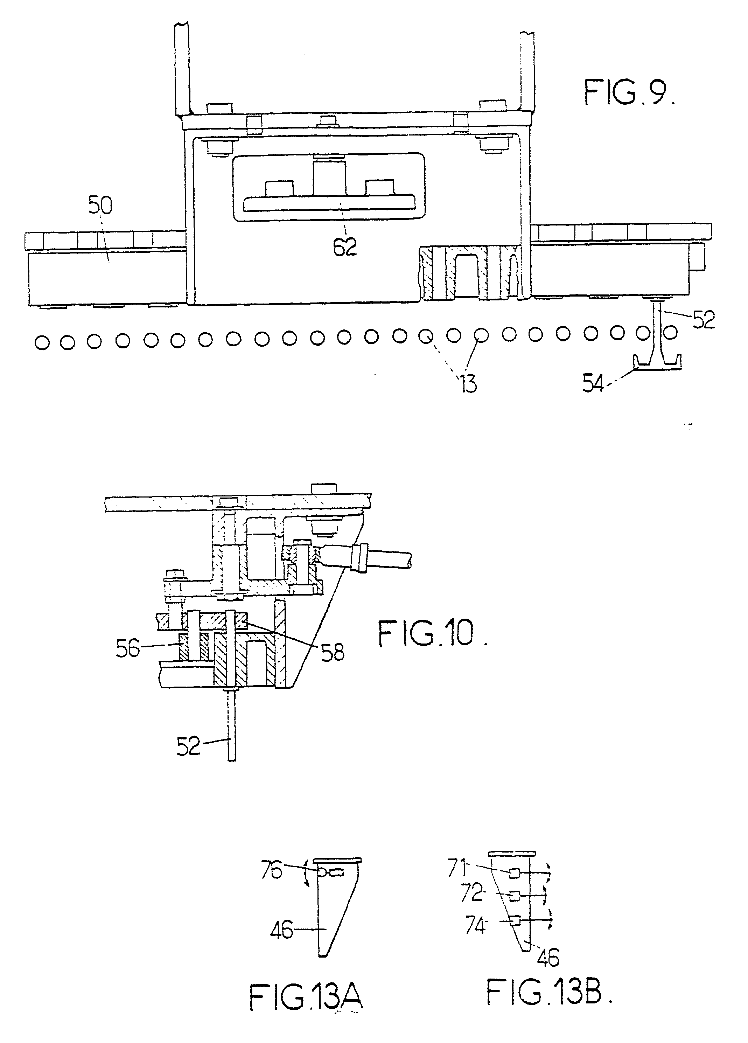

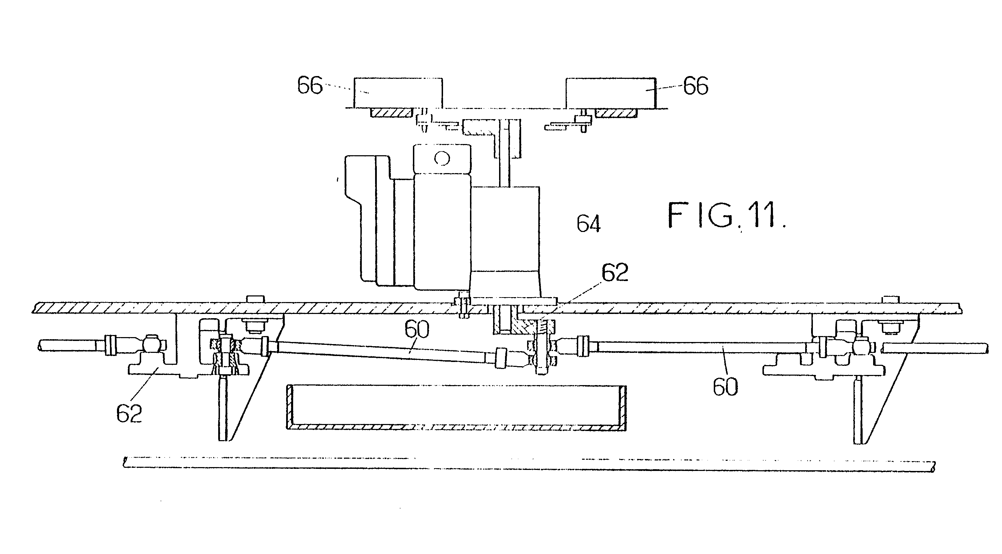

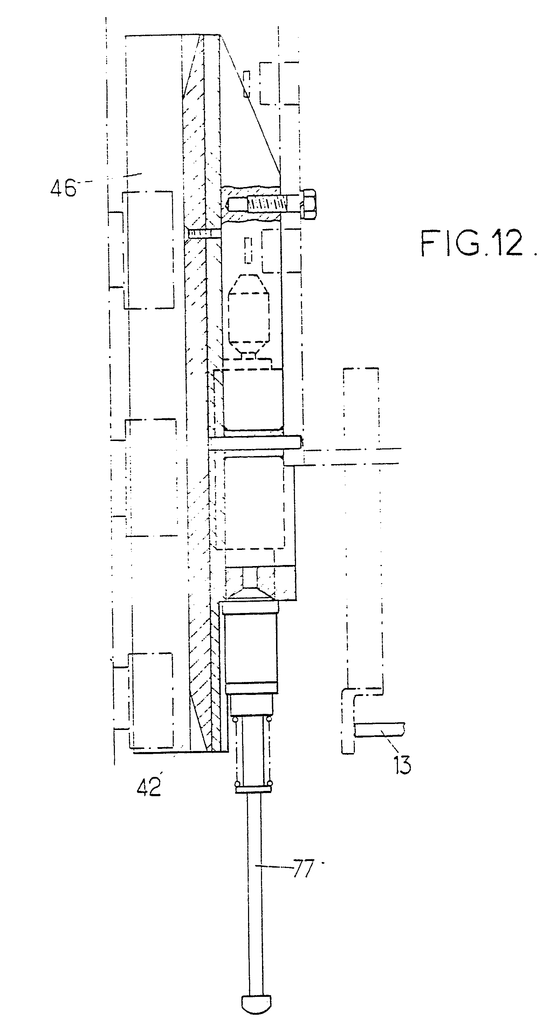

La face inférieure du palonnier 32 porte un dispositif de prise des gaines ou des crayons. Ce dispositif comprend un ensemble de traverses parallèles 50 équipées chacune d'une série de doigts 52 rotatifs autour d'un axe vertical portant chacune une clé à deux crochets opposés 54 (Figure 9). Un mécanisme d'entraînement en rotation des doigts 52 comporte des traverses mobiles 56 (Figure 10) qui entraînent un bras 58 pivotant par une tringlerie 60 (Figure 11) actionnant des plateaux tournants 62 reliés aux traverses mobiles. Un des plateaux 62 est relié à un moteur 64 qui provoque la rotation des plateaux de 90° à chaque fois pour provoquer la rotation simultanée de l'ensemble des clés, de 90° également. La limitation à 90° du changement d'orientation à chaque mise en action peut être effectuée à l'aide de contacteurs 66 coopérant avec un doigt entraîné par le moteur 64 (Figure 11). Ainsi, la mise en action du moteur 64 permet de faire tourner les doigts 52 de 90° et de mettre les crochets en position de prise une fois que les clés 54 ont été insérées dans une nappe de gaines ou de crayons portée par un râtelier afin de permettre au palonnier de soulever la nappe. Une autre mise en action permet d'abandonner une nappe de crayons après pose de ces derniers puis de dégager le palonnier.

Le transporteur est également muni d'un dispositif d'accostage, qui coopère avec les guides fixes et sera décrit après eux.

Guides fixes

Chacun des guides fixes de dépose et de reprise peut être regardé comme comportant une table râtelier 67 constituant interface avec le dispositif de stockage 28 correspondant et deux montants, 68, 69, encadrant la travée de manutention. Les montants portent chacun une file verticale de galets 70 dont seuls quelques uns sont représentés. Ces galets assurent le relais du guidage du palonnier 32 dans ses mouvements de descente par l'accostage des deux glissières 42 sur les galets 76. Le montant 68 porte en tête un témoin fixe qui coopère avec une cellule portée par le pont pour commander l'arrêt de celui-ci. Le montant 74 porte, lui, les deux témoins fixes 49 qui, par l'intermédiaire des deux cellules portées par le châssis mobile 47 de la potence 44 assurent le réaxage du palonnier jusqu'à ce que sa glissière 42 se place à la verticale de la file de galets 76 du montant 74.

La table 67 est équipée d'un ratelier de dépose présentant des emplacements de réception d'une nappe de gaines ou crayons au pas des séries de clés du palonnier. Le dispositif de stockage associé à cette table et à une seconde table décalée dans le sens de la travée assure la présentation de chaque gaine successivement au poste de travail ou son évacuation.

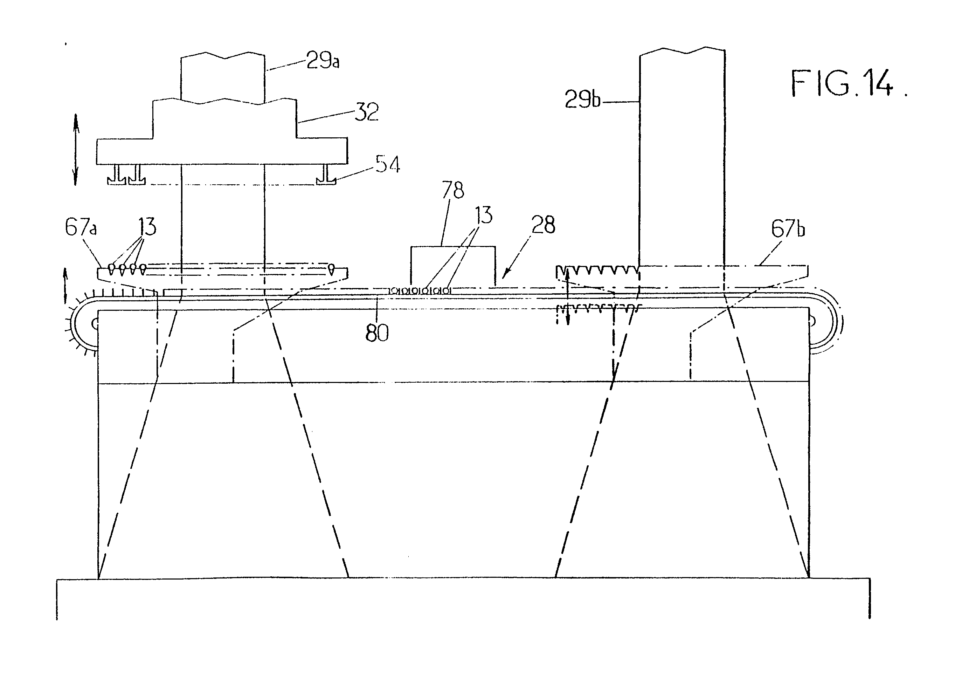

A titre d'exemple, la Figure 14 montre très schématiquement une constitution possible d'un dispositif de stockage permettant de découpler complètement la manutention le long de la travée à l'aide du transporteur 20 et la présentation de chaque gaine ou crayon à son tour au poste de travail. Pour cela, à chaque appareil destiné à intervenir sur la gaine ou le crayon, indiqué en 73, est associé un poste de travail placé en face. Ce poste de travail est encadré, dans le sens longitudinal, par un poste amont de dépose par le transporteur 20 et un poste aval de reprise par le transporteur. Chacun de ces postes comporte un ratelier, 67a au premier poste, 67b au second. Ce ratelier est encadré transversalement par deux guides, 29a dans le premier cas, 29b dans le second. Chaque ratelier est déplaçable verticalement entre une position haute, dans laquelle il est montré sur la Figure 14, et une position basse (en tirets sur la Figure). Lorsque le ratelier est en position haute, il peut recevoir des gaines ou crayons 13 par descente du palonnier 32 portant une nappe de gaines ou crayons, rotation des clés 54 et relèvement du palonnier. Lorsque le ratelier est en position basse, il abandonne les gaines ou crayons qu'il pose sur un convoyeur 80 muni de picots répartis au même pas que les encoches du ratelier 67a. Le ratelier et le convoyeur sont évidemment constitués sous forme de bandes longitudinales de largeur et d'écartement tels qu'ils puissent s'imbriquer l'un dans l'autre. Le ratelier et son mécanisme de montée et descente peuvent notamment avoir la constitution décrite dans la demande de brevet EP-A-0148 091 (publiée le 10.7.1985).

Grâce à cette disposition, il est possible au convoyeur de recevoir une nappe de gaines ou de crayons, puis de les déplacer jusqu'à ce qu'il les ait dégagés du ratelier. Le ratelier peut alors être relevé. Il est de nouveau prêt à recevoir une nappe de gaines ou de crayons. Il en est de même pour le ratelier 67b, ce qui assure un découplage complet entre la fonction de stockage et la fonction de présentation au poste de travail des gaines ou crayons successifs, qui s'effectue par avance pas-à-pas du convoyeur 80.

Pour assurer la sécurité lors des accostages des glissières sur le train de galets des potences 44, 46 ou sur celui des montants 68, 69, les glissières sont munies d'un revêtement souple chanfreiné côté entrée et sortie. De plus, on peut donner aux premiers galets des potences et des montants un diamètre légèrement inférieur à celui des autres.

Dispositif d'accostage du transporteur sur les guides fixes

Ce dispositif, déjà mentionné, a deux fonctions :

une fonction d'amortissement, à la dépose sur les socles des guides fixes de prise ou dépose ;

et une fonction de réduction de vitesse et d'arrêt aux positions haute et basse du palonnier lorsque ce dernier est engagé par ses guides latéraux dans les jeux de galets portés par les potences 44, 46 du pont et par les montants 68 et 69.

La fonction d'amortissement est assurée par l'accostage de deux palpeurs portés au bout de piges 77 (Figure 12) munies d'amortisseurs de freinage à rondelles élastiques.

La fonction de réduction de vitesse doit intervenir à la descente, lorsque le palonnier s'approche de sa position de butée basse, et à la montée, lorsque le palonnier arrive en position haute. Dans le premier cas, la réduction de vitesse peut être assurée par un dispositif monté sur chaque montant 68, 69 qui comprend deux contacteurs à came, le premier réduisant la vitesse de descente, le second provoquant l'arrêt du palonnier. Dans le second cas, le ralentissement, ainsi que l'augmentation de vitesse après un parcours déterminé, sont commandés par des contacteurs à doigts montés étagés sur la potence 46 du pont. Trois des contacteurs 71, 72 et 74 sont placés d'un côté de la potence 46 (Figure 13A). Le contacteur 71 est monté dans un circuit pour réduire la vitesse de montée, le second, 72, pour augmenter la vitesse de descente, le troisième, 74, pour provoquer l'arrêt en position haute. Un quatrième contacteur à came 76 est monté sur l'autre côté de la potence (Figure 13B). Il est destiné à n'autoriser le recentrage du pont à l'aide du châssis mobile que lorsqu'il est fermé, alors que le palonnier est en position haute.

Le fonctionnement de l'installation qui vient d'être décrite découle de sa constitution. Les gaines, puis les crayons, suivent le trajet indiqué par des flèches sur la Figure 2. Un lot de gaines sous forme d'une nappe est tout d'abord saisi par le convoyeur de la travée 16. Le convoyeur amène cette nappe, qui peut par exemple comporter vingt-quatre gaines, au poste de marquage M. Après marquage de toutes les gaines, le transporteur reprend la nappe de gaines marquées et les dépose sur la table râtelier du poste de montage des bouchons EM1. Après traitement de toutes les gaines, la nappe est reprise par le transporteur et elle parcourt les postes suivants. Toutefois, certaines opérations exigent une durée de stockage notable : c'est par exemple le cas pour le contrôle radiographique au poste RX1. Il est en effet nécessaire de développer les clichés puis de les exploiter. Pour cette raison est prévu un poste de stockage intermédiaire dynamique S1 à deux postes de dépose et deux postes de reprise desservis par le transporteur. Un stockage dynamique à sept lits horizontaux de tables de dépose, effaçable chacune par translation pour permettre d'accéder à toutes les gaines stockées, sera généralement satisfaisant. La table de tri TR1 qui suit le stockage permet d'extraire manuellement les gaines défectueuses et de les remplacer. Cette table de tri peut comporter trois postes successifs, le premier étant réservé uniquement à la dépose, le second à la reprise, le troisième à la prise et à la dépose vers un atelier de réparation.

On voit qu'il est ainsi possible, en utilisant la table de tri TR1 et le transporteur :

d'évacuer, vers l'atelier de réparation par le transporteur, puis le transbordeur 24, les gaines refusées décelées par le contrôle radiographique,

d'approvisionner en sens inverse depuis l'atelier, des gaines réparées.

Cette possibilité de transférer des gaines vers l'atelier de réparation et à partir de cet atelier à l'aide du transporteur (cette possibilité pouvant être étendue à la seconde travée du fait que celle-ci est également munie d'un stockage dynamique ST2) permet à la gaine de fonctionner en continu sans être tributaire des éventuels rebuts de gaines ou de crayons à la suite des contrôles.

Après le premier stockage et le premier tri, les nappes de gaines sont reprises par le transporteur et amenées au poste suivant, c'est-à-dire au poste de remplissage R1. Ce poste et les trois suivants exigent une intervention sur l'extrémité de la gaine ou du crayon opposée à celle traitée jusque là. Grâce à la disposition relative adoptée pour les travées de manutention et les travées de fabrication, cette intervention sur une extrémité, puis sur l'autre, est possible sans retournement des gaines.

Une fois toutes les opérations terminées, les crayons peuvent être placés sur un poste de stockage avant amenée à un atelier supplémentaire où s'effectue la fabrication des assemblages complets.

## Revendications

1. Installation de fabrication du type comportant plusieurs postes de travail que doivent successivement parcourir, au cours de leur fabrication, des objets (13) tous identiques ayant une forme générale externe allongée qui reste invariable au cours de la fabrication, installation dans laquelle les postes de travail sont disposés le long d'au moins une travée de manutention (16, 18), caractérisée en ce que l'installation comprend un dispositif de manutention ayant, d'une part, un transporteur aérien (20) mobile le long de la travée de manutention (16, 18) muni de moyens permettant de saisir, de transporter et de déposer un lot d'un nombre déterminé d'objets (13), d'autre part, au droit de chaque poste de travail, un dispositif de stockage intermédiaire et de reprise (28) ayant un poste amont de dépose par le transporteur, un poste aval de reprise par le transporteur et un convoyeur (80) capable de saisir en bloc le lot d'objets au poste amont, de présenter les objets un à un au poste de travail et de les poser en bloc au poste aval, de façon à découpler complètement le fonctionnement du transporteur de chaque poste de travail.

2. Installation de fabrication selon la revendication 1 caractérisée en ce que les objets tous identiques ayant une forme générale allongée qui reste invariable au cours de la fabrication sont des gaines de crayons combustibles pour réacteur nucléaire et en ce que chaque lot est constitué par une nappe horizontale de gaines.

3. Installation selon la revendication 2, caractérisée en ce que chaque dispositif de stockage intermédiaire comporte un convoyeur présentant plusieurs courroies sans fin parallèles munies de crans ou picots de réception des crayons à un pas supérieur au diamètre de ces derniers et en ce que les postes amont et aval comportent des supports parallèles munis de crans ou encoches au même pas que celui des courroies, pouvant prendre une position haute au-dessus du convoyeur pour soutenir les gaines ou crayons et une position basse dans laquelle les gaines ou crayons reposent sur le convoyeur.

4. Installation selon la revendication 3, caractérisée en ce que le transporteur (20) comporte un pont (30) roulant le long de la travée, muni d'un palonnier (32) déplaçable verticalement et comportant des clés (54) insérables entre gaines et permettant de saisir les gaines simultanément.

5. Installation selon l'une quelconque des revendications précédentes, caractérisée en ce qu'elle comprend au moins deux travées parallèles et des transbordeurs (22, 24) permettant de transférer en bloc un lot d'objets ou de crayons d'une travée à l'autre.

6. Installation selon l'une quelconque des revendications précédentes, caractérisée en ce que des appareils d'intervention sur les objets ou crayons sont disposés de chaque côté de la travée de manutention.

## Claims

1. A manufacturing installation of the type comprising a plurality of work stations through which successively pass, during their manufacture, identical objects having a general external elongated shape which remains unchanged during manufacture, installation wherein the work stations are disposed along at least one handling bay (16, 18) characterized in that the installation comprises a handling device having, on the one hand, an overhead transporter (20) movable along the handling bay (16, 18) and having means for engaging, transporting and laying down a set of a predetermined number of objects (13), and on the other hand, confronting each work station, an intermediate storage device and take-up (28) having an upstream station for receiving the objects laid down by the transporter, a downstream station for receiving the object to be taken up by the transporter and a conveyor (80) arranged for grasping the set of objects as a whole at the upstream station, presenting the objects one by one at the work station and laying them down as a whole at the downsteam station, so as to completely uncouple the operation of the transporter from each work station.

2. A manufacturing installation according to claim 1, characterized in that the objects all identical, having a general external elongated shape which remains unchanged during manufacture, are sheaths of nuclear fuel elements for nuclear reactor and in that each set is consisting of an horizontal layer of sheaths.

3. An installation according to claim 2, characterized in that each intermediate storage device comprises a conveyor having several parallel endless belts having notches or recesses at the same spacing pitch as that of the belts and, arranged for taking up a high position above the conveyor for supporting the pieces of fuel elements and a low position in which the piece of fuel elements rests on the conveyor.

4. Installation according to claim 3, characterized in that the transporter (20) has an overhead crane (30) travelling along the bay with a vertically movable lifting beam (32) comprising keys (54) insertable between the sheaths for grasping all sheaths in said layer simultaneously.

5. An installation according to anyone of the preceeding claims, characterized in that it comprises at least two parallel bays and traversers (22, 24) for transfering a set of objects or fuel elements as a whole from one bay to the other.

6. An installation according to anyone of the preceeding claims characterized in that apparatuses operating on the objects or fuel elements are disposed on each side of the handling bay.

**Patentansprüche**

1. Bearbeitungseinrichtung mit einer Mehrzahl von Bearbeitungsstationen, die von den Gegenständen (13) auf dem Wege ihrer Herstellung nacheinander durchlaufen werden müssen, wobei die Gegenstände alle identisch sind und eine im allgemeinen äußerlich lange Form aufweisen, die auf dem Fabrikationsweg unverändert bestehen bleibt, wobei bei der Einrichtung die Bearbeitungsstationen entlang wenigstens eines Behandlungsfeldes (16, 18) angeordnet sind, dadurch gekennzeichnet, daß die Einrichtung eine Behandlungsvorrichtung aufweist, die einerseits einen Luftförderer (20) aufweist, der entlang des Bearbeitungsfeldes (16, 18) bewegbar ist, ausgestattet mit Mitteln, die es erlauben, einen Teil einer vorbestimmten Anzahl der Gegenstände (13) zu ergreifen, zu transportieren und abzulegen, und die andererseits bei jeder Bearbeitungsstation eine Einrichtung zur Zwischenlagerung und zur Wiederaufnahme (28) aufweist, die eine obere Station zur Ablage durch den Förderer und eine untere Station zur Aufnahme durch den Förderer und einen Förderer (80) aufweist, der in der Lage ist, insgesamt den Teil der Gegenstände in der oberen Station als Ganzes zu ergreifen, die Gegenstände jeweils einen nach dem anderen einer Bearbeitungsstation zuzuführen und die Gegenstände insgesamt auf der unteren Station abzulegen, in der Weise, daß die Funktion des Transporters in jeder Bearbeitungsstation vollständig abgekoppelt wird.

2. Bearbeitungsstation nach Anspruch 1, dadurch gekennzeichnet, daß jeder der vollständig identischen Gegenstände, die eine im allgemeinen längliche Form aufweisen, welche auf dem Bearbeitungsweg unverändert bleibt, die Hüllen von Brennstäben für Nuclearreaktoren darstellen und dadurch, daß jeder Teil von einer Horizontalschicht von Hüllen gebildet wird.

3. Vorrichtung nach Anspruch 2, dadurch gekennzeichnet, daß jede Zwischenlagereinrichtung einen Förderer aufweist, der wiederum mehrere parallele Endlosgurte trägt, die mit Kerben oder Spitzen zur Aufnahme der Stäbe in einer größeren Schrittweite als dem Durchmesser der letzteren versehen sind, und dadurch, daß die oberen und unteren Stationen parallele Supporte aufweisen, die mit Einschnitten oder Kerben in derselben Schrittweite ausgerüstet sind, wie diejenigen der Gurte, wobei sie eine hohe Position oberhalb der Stäbe einnehmen können, um die Hüllen oder Stifte abzustreifen und eine untere Position, um die Hüllen oder Stifte auf dem Förderer wieder abzulegen.

4. Vorrichtung nach Anspruch 3, dadurch gekennzeichnet, daß der Transporter (20) eine Brücke (30) aufweist, die entlang des Bearbeitungsfeldes rollbar ist, versehen mit einem Hebel (32), der vertikal verschwenkbar ist und Haken (54) aufweist, die zwischen die Hüllen eingreifen können und es erlauben, die Hüllen simultan zu ergreifen.

5. Vorrichtung nach einem der vorangehenden Ansprüche, dadurch gekennzeichnet, daß sie wenigstens zwei parallele Traversen und Bühnen (22, 24) aufweist, die es erlauben, en bloc eine Lage von Gegenständen oder Stäben von einem Feld zum anderen zu transferieren.

6. Vorrichtung nach einem der vorangehenden Ansprüche, dadurch gekennzeichnet, daß Interventionsvorrichtungen für die Gegenstände oder die Stäbe an jeder Seite des Behandlungsfeldes angeordnet sind.

FIG.1.

FIG.2.

# FIG.3.

20

24 27

26

28

27

29 29 29

FIG.4.

0 148 092

FIG.5.

29
28

24

FIG.6.

# FIG.7.

32

36    36

77    52    IX    77

# FIG.8.

32    50    13    50

0 148 092

FIG.9.

50

62

52

13

54

FIG.10.

56

58

52

76

46

FIG.13A

71

72

74

46

FIG.13B.

FIG. 11.

0 148 092

FIG.12 .

FIG.14.

29a
32
54
67a
13
78
13
28
29b
67b
80

0 148 092

9